# EUROPEAN PATENT APPLICATION

(11) **EP 4 847 788 A1**
(43) Date of publication of application: **02.12.2026**
(21) Application number: 25425023.6
(22) Date of filing: 30.05.2025
(51) Int. Cl.: F15B 11/12, F15B 15/14, F15B 15/26, F15B 20/00, F15B 15/28

(54) **CONTROL ASSEMBLY**

(71) Applicant: Microtecnica S.r.l., 10126 Turin (IT)
(72) Inventor: Tafuni, Domenico, 10126 Torino (TO) (IT); Salvatoriello, Gianfranco, 10040 Rivalta di Torino (TO) (IT)
(74) Representative: Casalonga

(57) **Abstract**

A control assembly comprising: a hydraulic module; and an actuator comprising: a first piston configured to translate in response to a controlled flow from the hydraulic module; and a detent mechanism configured to resist movement of the first piston; wherein the detent mechanism is configured to disengage from the first piston during operation of the actuator.

## Description

This disclosure relates to a control assembly.

### BACKGROUND

A SCAS control assembly typically comprises a hydraulic linear actuator comprising a piston located within a centring spring. During operation of the SCAS, the spring continuously cycles between a compressed state and an uncompressed state as the piston retracts and extends, causing wear to the spring due to frictional forces. Additionally, in order to retract or extend the piston, the actuator has to work against the restoring force of the spring, reducing the active force of the SCAS at the maximum stroke of the piston and thereby limiting its performance.

### SUMMARY

In a first aspect of the present invention, there is provided a control assembly comprising: a hydraulic module; and an actuator comprising: a first piston configured to translate in response to a controlled flow from the hydraulic module; and a detent mechanism configured to resist movement of the first piston; wherein the detent mechanism is configured to disengage from the first piston during operation of the actuator.

The actuator may comprise a linear hydraulic actuator.

The first piston may be configured to translate during operation of the actuator without engaging the detent mechanism.

The detent mechanism may comprise a resilient member. The resilient member may be a (centring) spring.

The detent mechanism may comprise a second piston and a third piston. The resilient member may be located between the second piston and the third piston.

The second piston and the third piston may be configured to translate in response to a controlled flow from the hydraulic module.

The second piston and third piston may be configured to compress the resilient member in response to a controlled flow from the hydraulic module.

The second piston and the third piston may be configured to maintain the compression of the resilient member during operation of the actuator.

A position of the resilient member may be fixed within the actuator.

A position of the second piston and the third piston may be fixed during operation of the actuator.

The first piston may comprise a first end stop and a second end stop.

The resilient member may be located between the first end stop and the second end stop. The second piston and the third piston may be located between the first end stop and the second end stops.

The resilient member may be configured to extend in the event of a hydraulic failure so that the second piston engages the first end stop and the third piston engages the second end stop.

The control assembly may comprise a return port configured to drain fluid from the actuator.

The return port may be configured to drain the fluid such that the position of the second piston and the third piston are fixed during operation of the actuator.

The hydraulic module may comprise a first valve and/or a second valve. The first valve may be configured to supply a controlled flow to the second valve.

The second piston and the third piston may be configured to translate in response to a controlled flow from the first valve.

The first piston may be configured to translate in response to a controlled flow from the second valve.

The control assembly may further comprise a controller. The controller may be configured to control operation of the hydraulic module. The controller may be configured to control operation of the first valve and/or the second valve.

The controller may be configured to vary the controlled flow from the hydraulic module so that the position of the second piston and the third piston are fixed during operation of the actuator.

The controller may be configured to vary the controlled flow from the hydraulic module so that the first piston translates during operation of the actuator.

The detent mechanism may be configured to lock a position of the first piston. The detent mechanism may be configured to lock the position of the first piston in the absence of a controlled flow from the hydraulic module. The detent mechanism may be configured to lock the position of the first piston in the event of a hydraulic failure.

The control assembly may be a Stability Control and Augmentation System control assembly.

In a second aspect, there is provided an aircraft comprising the control assembly as described above.

Embodiments will be further described and explained by way of example with reference to the accompanying drawings in which:
Figure 1 is a schematic of a Stability Control and Augmentation System ("SCAS") control assembly;
Figure 2a is a schematic of a linear hydraulic actuator in a null state;
Figure 2b is a schematic of a linear hydraulic actuator in a null state;
Figure 2c is a schematic of a linear hydraulic actuator in a retracted state; and
Figure 2d is a schematic of a linear hydraulic actuator in an extended state.

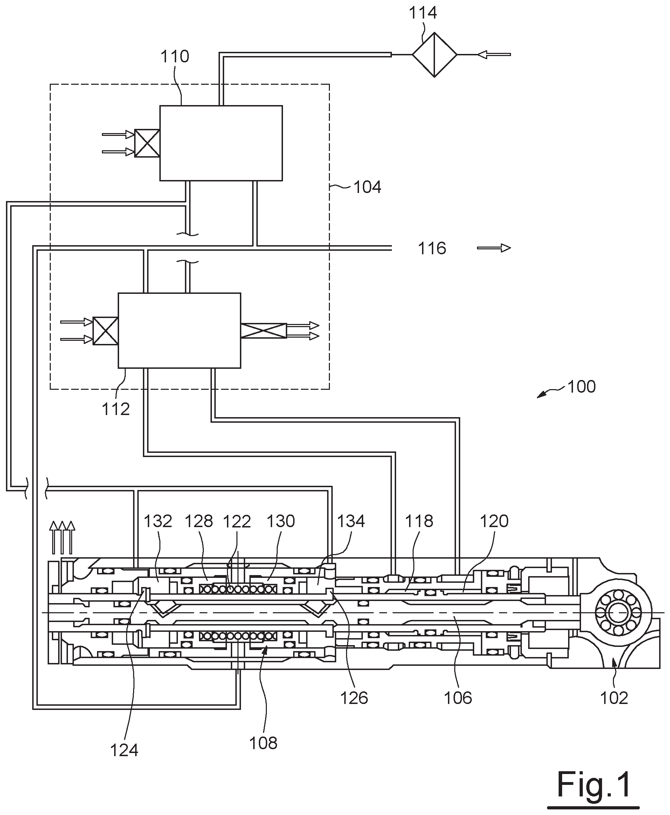

With reference to Figure 1, a control assembly 100 comprises an actuator 102 and a hydraulic module 104. The actuator 102 comprises a first piston 106 that translates in response to a controlled flow of fluid from the hydraulic module 104 and a detent mechanism 108 that resists movement of the first piston 106. During operation of the actuator 102, the detent mechanism 108 disengages from the first piston 106. This allows the first piston 106 to translate without interference from the detent mechanism 108. In particular, the first piston 106 may translate during operation of the actuator 102 without engaging the detent mechanism 108.

The actuator 102 may comprise a linear hydraulic actuator. In some embodiments, the control assembly 100 is a Stability Control and Augmentation System ("SCAS") control assembly for use in an aircraft, such as a helicopter.

The hydraulic module 104 may comprise a first valve 110 and a second valve 112. The first valve 110 may receive a flow of fluid from a supply 114. When the first valve 110 is in an open configuration, the first valve 110 may supply the flow of fluid to the second valve 112. If the second valve 112 is also in an open configuration, the second valve 112 may supply the flow of fluid to the actuator 102. However, if the second valve 112 is in a closed configuration, the second valve 112 may supply the flow of fluid to a return port 116 and the actuator 102 may not receive any flow of fluid. Likewise, when the first valve 110 is in a closed configuration, the first valve 110 may supply the flow of fluid to the return port 116, and the second valve 112 may not receive any flow of fluid. In some embodiments, the first valve 110 may comprise a solenoid valve, and/or the second valve may comprise an electrohydraulic servo-valve ("EHSV").

The first piston 106 may translate in response to a controlled flow of fluid from the second valve 112. As illustrated, the actuator 102 may comprise a first fluid chamber 118 and a second fluid chamber 120, and the first piston 106 may be arranged between the first fluid chamber 118 and the second fluid chamber 120. During operation, the second valve 112 may supply a flow of fluid to the first and/or second fluid chambers 118, 120, causing the first piston 106 to translate. In some embodiments, the first piston 106 may comprise a double acting piston.

More specifically, the second valve 112 may supply a flow of fluid to the first fluid chamber 118 at a first pressure and may supply a flow of fluid to the second chamber 120 at a second pressure. When the first pressure is greater than the second pressure, the first piston 106 may translate (i.e. extend) in a first direction (i.e. to the right). When the first pressure is less than the second pressure, the first piston 106 may translate (i.e. retract) in a second direction (i.e. to the left).

As illustrated, the detent mechanism 108 may comprise a resilient member 122, such as a centring spring, which may be located parallel to an axis of the actuator 102 and may surround the first piston 106. The position of the resilient member 122 within the actuator 102 may be fixed, i.e. the resilient member 122 may not translate or slide, reducing wear due to frictional forces. During operation of the actuator 102, the resilient member 122 may disengage from the first piston 106. However, in the event of a hydraulic failure, the resilient member 122 may (indirectly) engage the first piston 106, thereby preventing further translation of the first piston 106.

The first piston 106 may comprise a first end stop 124 and a second end stop 126, and the detent mechanism 108 may be positioned between the first and second end stops 124, 126. As such, the detent mechanism 108 may disengage from the first piston 106 by disengaging from the first and second end stops 124, 126. However, in the event of a hydraulic failure, the detent mechanism 108 may prevent operation of the actuator 102 by engaging the first and second end stops 124, 126, thereby resisting movement of the first piston 106.

More specifically, the resilient member 122 of the detent mechanism 108 may be located between the first and second end stops 124,126. During operation of the actuator 102, the resilient member 122 may disengage from the first and second end stops 124, 126. However, during a hydraulic failure, the resilient member 122 may (indirectly) engage the first and second end stops 124, 126 to prevent further translation of the first piston 106.

The detent mechanism 108 may further comprise a second piston 128 and a third piston 130. The second and/or third pistons 128, 130 may be parallel to the axis of the actuator 102 and may be arranged around the first piston 106. The second piston 128 may be positioned between the first end stop 124 and the resilient member 122, and the third piston 130 may be positioned between the second end stop 126 and the resilient member 122. That is, the resilient member 122 may be positioned between the second and third pistons 128, 130.

The second and/or third pistons 128, 130 may be configured to translate in response to a controlled flow of fluid from the first valve 110. As illustrated, a third fluid chamber 132 may be arranged between the second piston 128 and the first end stop 124 and a fourth fluid chamber 134 may be arranged between the third piston 130 and the second end stop 126. When the first valve 110 is in an open configuration, the first valve 110 may supply a flow of fluid to the third and/or fourth fluid chambers 132, 134. The first valve 110 may supply a flow of fluid to the third fluid chamber 132 at a third pressure and/or may supply a flow of fluid to the fourth chamber 134 at a fourth pressure. The third and fourth pressure may be the same. When the first valve 110 is in a closed configuration, the third and/or fourth fluid chambers 132, 134 may receive no flow of fluid.

During operation of the actuator 102, the second and/or third pistons 128, 130 may disengage from the first piston 106. That is, the second piston 128 may disengage from the first end stop 124 and/or the third piston 130 may disengage from the second end stop 126. However, in the event of a hydraulic failure, the second and/or third pistons 128, 130 may (directly) engage the first piston 106, thereby preventing further translation of the first piston 106. That is, the second piston 128 may (directly) engage the first end stop 124 and/or the third piston 130 may (directly) engage the second end stop 126.

In order to disengage the detent mechanism 106 from the first piston 106, the second and third pistons 128, 130 may compress the resilient member 122 in response to a controlled flow of fluid from the hydraulic module 104, i.e. the first valve 110. The position of the second and third pistons 128, 130 may be fixed during operation of the actuator 102. As such, the second and third pistons 128, 130 may be able to maintain the compression of the resilient member 122 during operation of the actuator 122. Then, when there is a hydraulic failure, the resilient member 122 may extend so that the second piston engages 128 the first end stop 124 and the third piston 130 engages the second end stop 126. This may be the case when the third and/or fourth fluid chambers 132, 134 are connected to the return port 116, i.e. so that during a hydraulic failure, the fluid in the third and/or fourth fluid 132, 134 chambers drains away. The first and/or second fluid chambers 118, 120 may also be connected to the return port 116.

Engagement between the second piston 128 and the first end stop 124 herein means that the second piston 128 may contact the first end stop 124. That is, when the resilient member 122 extends, the resilient member 122 may push the second piston 128 towards the first end stop 124 so that the second piston 128 abuts the first end stop 124. Conversely, when the second piston 128 is disengaged from the first end stop 124, the second piston 128 may not contact the first end stop 124. Engagement or disengagement between the third piston 130 and the second end stop 126 may be the same as engagement or disengagement between the second piston 128 and the first end stop 124.

By providing a detent mechanism 108 that disengages from the first piston 106 during operation of the actuator 102, the first piston 106 is able to translate without working against the restoring force of the resilient member 122, thereby maximising the active force of the first piston 106 at its maximum stroke.

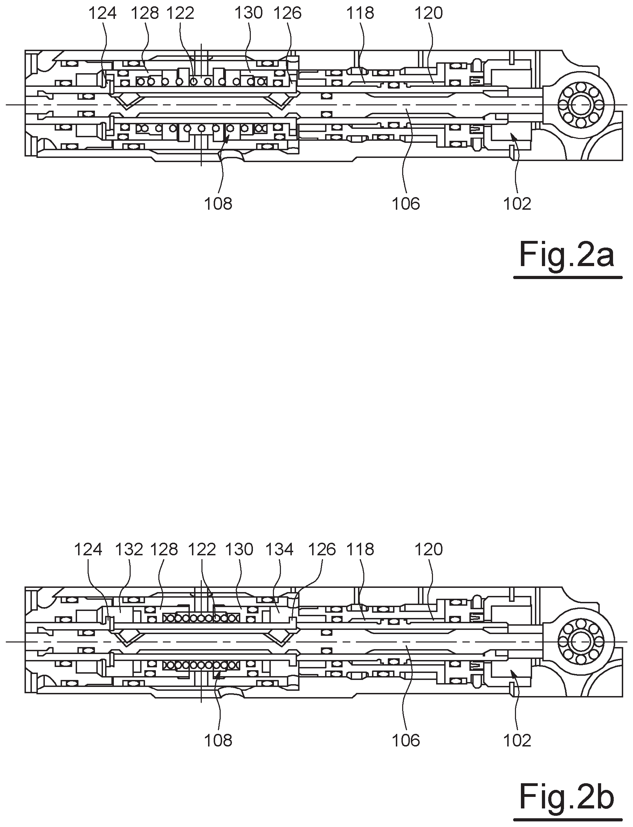

With reference to Figures 2a-2d, operation of the control assembly 100 will now be described.

When the actuator 102 is not in operation, the first valve 110 may be in the closed configuration. In this case, the first valve 110 supplies the flow of fluid to the return port 116, such that no flow of fluid is supplied to the first and second fluid chambers 118, 120, or the third and fourth fluid chambers 132, 134. This causes the actuator 102 to be in an unpressurised state. As illustrated in Figure 2a, the absence of pressure within the third and fourth fluid chambers 132, 134 means there is no compressive force on the resilient member 122. This allows the resilient member 122 to be in a neutral or equilibrium state (i.e. uncompressed and unstretched) so that the second piston 128 engages the first end stop 124 and the third piston 130 engages the second end stop 126. With the second and third pistons 128, 130 engaging respective end stops 124, 126, movement of the first piston 106 is resisted, preventing operation of the actuator 102.

When the actuator 102 is in operation, the first valve 110 is in an open configuration. In this case, a flow of fluid is supplied to the third and fourth fluid chambers 132, 134 at a pressure that is greater than the restoring force of the resilient member 122. This pressure may be a predetermined pressure. As illustrated in Figure 2b, this causes the second piston 128 to disengage the first end stop 124 and the third piston 130 to disengage the second end stop 126. In doing so, the second and third pistons 128, 130 translate in opposite directions towards each other, compressing the resilient member 122 between them. This preloads the resilient member 122 and disengages the resilient member 122 from the first piston 106.

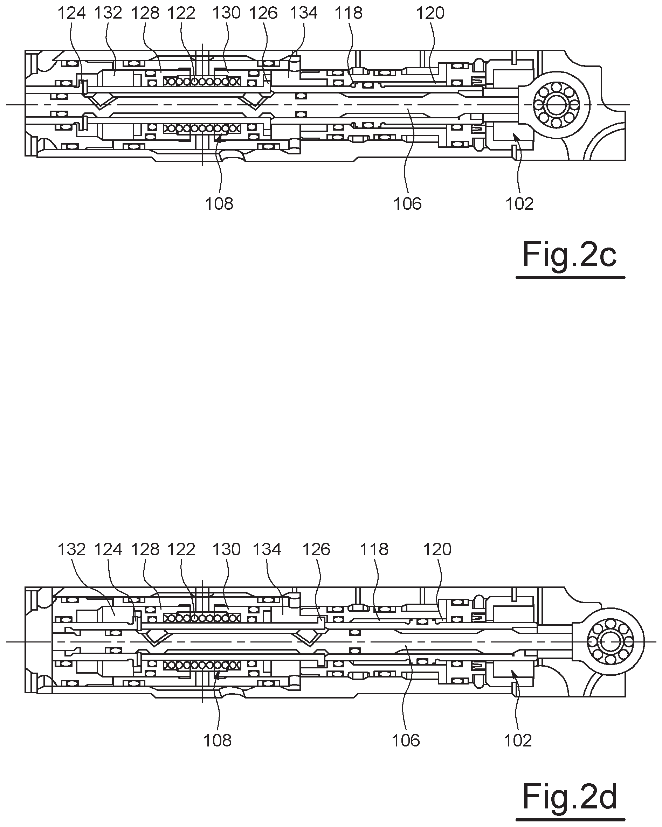

With the second and third pistons 128, 130 disengaged from respective end stops 124, 126, the first piston 106 is able to translate, allowing operation of the actuator 102. More specifically, when the first valve 110 is in the open configuration, pressurised fluid is also supplied to the second valve 112. The second valve 112 supplies the pressurised fluid to the first fluid chamber 118 at the first pressure and the second fluid chamber 120 at the second pressure. Fig. 2c illustrates the case in which the second pressure is greater than the first pressure causing the first piston 106 the retract (i.e. translate) in the second direction (i.e. to the left).

As the first piston 106 translates, the second end stop 126 moves towards the third piston 130 and the fluid in the fourth fluid chamber 134 drains to the return port 116 at a rate that maintains the pressure in the fourth fluid chamber 134. This allows the position of the third piston 130 to be fixed during operation of the actuator 102 so that the compression (i.e. preload) of the resilient member 122 is maintained. As such, the first piston 106 is able to retract without working against the pressure in the fourth fluid chamber 134, i.e. such that there is no force acting against the first piston 106. Moreover, the second end stop 126 does not engage the third piston 130 at all allowing the first piston 106 to reach a maximum stroke. The actuator 102 does not therefore have to work against the restoring force of the resilient member 122 during operation, thereby providing an improved performance.

Fig. 2d illustrates the case in which the second pressure is less than the first pressure causing the first piston 106 to extend (i.e. translate) in the first direction (i.e. to the right). As the first piston 106 translates, the first end stop 124 moves towards the second piston 128 and the fluid in the third fluid chamber 132 drains to the return port 116 at a rate that maintains the pressure in the third fluid chamber 132. This allows the position of the second piston 128 to be fixed during operation of the actuator 102 so that the compression (i.e. preload) of the resilient member 122 is maintained. As such, the first piston 106 is able to retract without working against the pressure in the third fluid chamber 132, i.e. such that there is no force acting against the first piston 106. Moreover, the first end stop 124 does not engage the second piston 128 at all allowing the first piston 106 to reach a maximum stroke. The actuator 102 does therefore not have to work against the restoring force of the resilient member 122 during operation, thereby providing an improved performance.

In some embodiments, the pressure in the second and/or third fluid chambers 132, 134 may be maintained by varying the pressure of the flow of fluid supplied by the first valve 110.

In the event of a hydraulic failure, the fluid in the first, second, third and fourth fluid chambers 118, 120, 132, 134 drains to the return port 116. This causes the pressure in the third and fourth fluid chambers 132, 134 to decrease below the restoring force of the resilient member 122. In the absence of pressure, the resilient member 122 extends to its neutral or equilibrium state, causing the second piston 128 to engage the first end stop 124 and the third piston 130 to engage the second end stop 126, and thereby resisting movement of the first piston 106.

The detent mechanism 108 may be configured to resist movement of the first piston by locking a position of the first piston. The detent mechanism may be configured to lock the position of the first piston 106 in the absence of a controlled flow, for example, when the first valve 110 is in a closed configuration, i.e. when operation of the actuator 102 is not required.

In some embodiments, the actuator 102 may further comprise a first position sensor that measures a position of the first piston 106. The second valve 112 may comprise a second position sensor that measures the position of a spool of the second valve 112. The first and/or second position sensors may comprise a Linear Variable Differential Transformer ("LVDT").

A controller may control operation of the first and/or second valves 110, 112, such as a flight control computer ("FCC"). The controller may be configured to open and close the first and/or second valves 110, 112. In particular, the controller may be configured to control operation of the second valve 112, when the second valve 122 is open, so as to adjust the pressure of the flow of fluid supplied to the first fluid chamber 118 and/or the pressure of the flow of fluid supplied to the second fluid chamber 120. The controller may also be configured to receive the position of the first piston 106 from the first position sensor and/or the position of the spool from the second position sensor. Electrical signals to and from the controller are illustrated by transparent arrows in Figure 1.

Various aspects of a control assembly 100 disclosed in the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from the invention in its broader aspects. The scope of the following claims should not be limited by the embodiments set forth in the examples, but should be given the broadest reasonable interpretation consistent with the description as a whole.

## Claims

1. A control assembly comprising:
a hydraulic module; and
an actuator comprising:
a first piston configured to translate in response to a controlled flow from the hydraulic module; and
a detent mechanism configured to resist movement of the first piston;
wherein the detent mechanism is configured to disengage from the first piston during operation of the actuator.

2. The control assembly of claim 1, wherein the detent mechanism comprises a second piston, a third piston, and a resilient member located between the second piston and the third pistons.

3. The control assembly of claim 2, wherein the second piston and the third piston are configured to compress the resilient member in response to a controlled flow from the hydraulic module.

4. The control assembly of claim 3, wherein the second piston and the third piston are configured to maintain the compression of the resilient member during operation of the actuator.

5. The control assembly of any of claims 2-4, wherein a position of the resilient member is fixed within the actuator.

6. The control assembly of any of claims 2-5, wherein a position of the second piston and the third piston is fixed during operation of the actuator.

7. The control assembly of any of claims 2-6, wherein the first piston comprises a first end stop and a second end stop.

8. The control assembly of any of claim 7, wherein the second piston and the third piston are located between the first and second end stops.

9. The control assembly of claims 7 or 8, wherein the resilient member is configured to extend in the event of a hydraulic failure so that the second piston engages the first end stop and the third piston engages the second end stop.

10. The control assembly of any of claims 2-9, wherein the hydraulic module comprises a first valve and a second valve, the first valve being configured to supply a controlled flow to the second valve.

11. The control assembly of claim 10, wherein the second piston and the third piston are configured to translate in response to a controlled flow from the first valve.

12. The control assembly of claims 10 or 11, wherein the first piston is configured to translate in response to a controlled flow from the second valve.

13. The control assembly of any preceding claim, comprising a return port configured to drain fluid from the actuator.

14. The control assembly of any preceding claims, wherein the control assembly is a Stability Control and Augmentation System control assembly.

15. An aircraft comprising the control assembly as claimed in any preceding claim.
